# FASCICULE DE BREVET EUROPEEN

(11) **EP 2 853 693 B1**
(45) Date de publication et mention de la délivrance du brevet: **08.08.2018**
(21) Numéro de dépôt: 14186032.0
(22) Date de dépôt: 23.09.2014
(51) Int. Cl.: F01D 15/10, B60R 16/03, F02C 7/32

(54) **Procédé et module de protection contre les pics de couple entre un moteur et une machine électrique**
Schutzverfahren und -modul gegen Drehmomentspitzen zwischen einem Motor und einer elektrischen Maschine
Method and module for protecting against torque peaks between a motor and an electric machine

(30) Priorité: 26.09.2013 FR 1302237
(43) Date de publication de la demande: 01.04.2015
(73) Titulaire: Dassault Aviation, 75008 Paris (FR)
(72) Inventeur: Le Peuvedic, Jean-Marc, 92150 Suresnes (FR)
(74) Mandataire: Lavoix

(56) Documents cités:
- DE-A1-102010 029 299
- FR-A1- 2 968 716
- FR-A1- 2 979 767
- FR-A1- 2 981 525
- US-A1- 2003 178 973
- US-A1- 2007 021 267
- US-A1- 2008 157 539
- US-A1- 2012 130 597

## Description

La présente invention concerne un procédé de protection contre les pics de couple dans un système comprenant un ensemble électrique comportant une ou des charges électriques, un moteur adapté pour mettre un arbre du moteur en rotation, une source électrique comprenant au moins une machine électrique et adaptée pour alimenter électriquement l'ensemble électrique, ladite source électrique comportant une section fixe et une section tournante adaptée pour tourner solidairement avec l'arbre.

De tels systèmes sont disposés par exemple dans les aéronefs. Lors de brusques variations des besoins en alimentation électrique des charges électriques par exemple, la machine électrique, comportant par exemple un ou des alternateurs de très forte puissance, impose parfois des pics de couple à l'arbre du moteur qui peuvent endommager ou fragiliser certains éléments du moteur.

Le document EP 2 415 991 propose une solution mécanique selon laquelle un embrayage conique est disposé entre la machine électrique et un relais d'accessoires du moteur. En agissant sur la vitesse de l'arbre du moteur entraînant la machine électrique, cette solution est en outre susceptible d'entraîner des écarts importants de fréquence et de tension de l'alimentation électrique fournie à l'ensemble électrique par rapport à la norme lorsque la machine électrique essaie d'extraire une forte puissance à bas régime du moteur, et que l'embrayage glisse. La non-linéarité de la solution et l'excursion de fréquence ne permettent pas d'optimiser la puissance extraite du relais d'accessoires.

Le document US 7 745 950 propose l'ajout d'une turbine libre dédiée à la génération électrique de forte puissance apte à démarrer le moteur au moyen d'un embrayage vers l'arbre haute pression. Cette solution présente l'inconvénient de modifier profondément l'architecture du moteur, nécessitant un allongement du moteur susceptible de provoquer l'allongement de l'aéronef lui-même. En outre, la masse additionnelle n'est pas négligeable.

De tels systèmes peuvent également être disposés dans des véhicules automobiles ou des groupes électrogènes. Des solutions pour assurer un fonctionnement stable du moteur dans un pareil contexte sont décrites dans FR-A-2 979 767, US 2003/0178973, US 2007/0021267 et FR-A-2 981 525.

La présente invention vise à proposer une solution de protection contre les pics de couple.

A cet effet, suivant un premier aspect, l'invention propose un procédé selon la revendication 1 de protection contre les pics de couple du type précité caractérisé en ce qu'il comporte une étape de pilotage du fonctionnement de la source électrique contraignant le mouvement de rotation de la section tournante avec l'arbre à respecter une consigne relative au couple de la section tournante appliqué à l'arbre du moteur, ladite consigne étant adaptée en fonction d'au moins un élément caractérisant un état courant de fonctionnement du moteur.

Cette solution permet d'optimiser la puissance extraite du moteur par la machine électrique en s'adaptant à l'état du moteur, par exemple à la vitesse de rotation du moteur, permettant ainsi de prendre en compte que le couple nécessaire pour fournir une puissance électrique décroît lorsque la vitesse de rotation du moteur augmente et ne limitant donc pas inutilement la production électrique lors des régimes normaux de vol.

Dans des modes de réalisation, le procédé de protection contre les pics de couple suivant l'invention comporte en outre une ou plusieurs des caractéristiques suivantes :
- ladite consigne est fonction d'au moins un élément caractérisant un état de fonctionnement courant du moteur parmi la vitesse de rotation de l'arbre du moteur, un taux de compression de l'air dans le moteur, un indicateur de capacité à accepter un prélèvement calculé par le moteur, un débit de carburant relatif au moteur, un seuil de variation de couple prélevé calculé par le moteur ;
- la consigne fixe au moins une valeur-seuil parmi une valeur-seuil maximale de couple, une valeur-seuil minimale de couple, une valeur-seuil maximale de vitesse de variation de couple et une valeur-seuil minimale de vitesse de variation de couple ;
- une pluralité d'équipements parmi la source électrique et les charges sont pilotés de manière à respecter chacun une courbe liant la tension aux bornes de l'équipement et le courant traversant l'équipement, présentant une première zone avec un plateau de courant pour des valeurs de tension dans une plage comprenant une tension minimale de fonctionnement, une deuxième zone dans laquelle le courant décroît lorsque la tension augmente au-delà de ladite plage, et une troisième zone avec un plateau de courant pour des valeurs de tension au-delà de la deuxième zone.

Suivant un deuxième aspect, la présente invention propose un module selon la revendication 7 de protection contre les pics de couple destiné à un système comprenant un ensemble électrique comportant une ou des charges électriques, un moteur adapté pour mettre un arbre du moteur en rotation, une source électrique comprenant au moins une machine électrique et adaptée pour alimenter électriquement l'ensemble électrique, ladite source électrique comportant une section fixe et une section tournante adaptée pour tourner solidairement avec l'arbre, ledit module de protection étant adapté, pour piloter le fonctionnement de la source électrique en contraignant le mouvement de rotation de la section tournante avec l'arbre à respecter une consigne relative au couple de la section tournante appliqué à l'arbre du moteur, ledit module étant caractérisé en ce qu'il est adapté pour déterminer un élément caractérisant un état de fonctionnement courant du moteur, et pour adapter en outre ladite consigne en fonction d'au moins ledit élément.

Ces caractéristiques et avantages de l'invention apparaîtront à la lecture de la description qui va suivre, donnée uniquement à titre d'exemple, et faite en référence aux dessins annexés, sur lesquels :
- la figure 1 représente un système dans un mode de réalisation de l'invention ;
- la figure 2 représente une loi courant-tension d'un alternateur dans un mode de réalisation de l'invention.

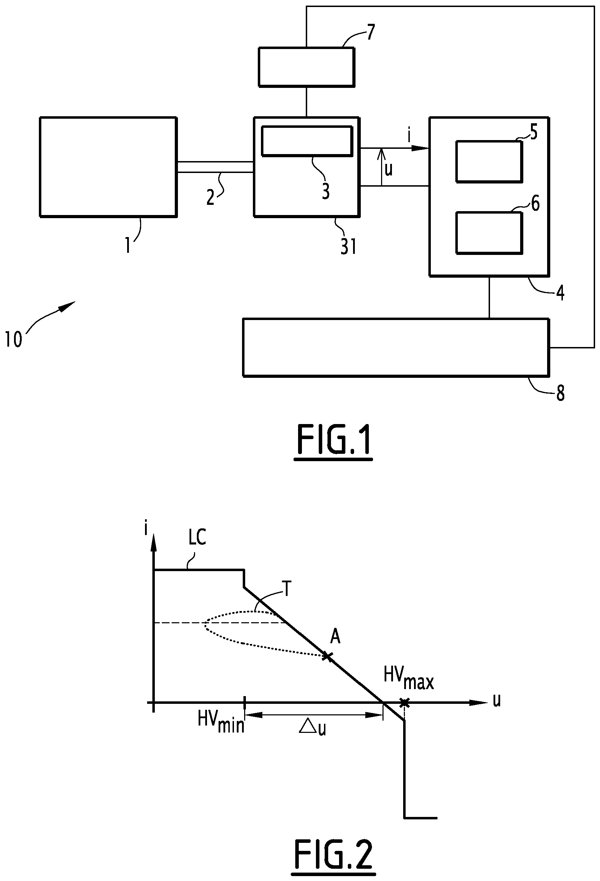

Sur la figure 1, un système 10 dans un mode de réalisation de l'invention est représenté.

Le système 10 comporte un bloc moteur 1, dit moteur 1, une source électrique 31 et un réseau électrique 4.

La source électrique 31 comporte une machine électrique 3, et un redresseur actif non représenté.

Dans le mode de réalisation considéré, le système 10 est embarqué dans un aéronef, comportant par exemple plusieurs moteurs similaires au moteur 1, eux-mêmes reliés à des machines électriques.

Le système 10 comporte en outre un contrôleur de machine électrique 7 et un bloc de gestion d'énergie 8 relié au contrôleur de machine électrique 7.

Le moteur 1 comprend un arbre 2 et est adapté pour entraîner l'arbre 2 en rotation selon une vitesse de rotation appelée vitesse de rotation du moteur.

Dans un mode de réalisation, le moteur 1 comprend par exemple un relais d'accessoires, une section de compression d'air, une section de combustion d'air compressé et de carburant et une section de turbine alimentée par les gaz issus de la combustion et produisant de l'énergie mécanique d'entraînement de l'arbre 2.

La source électrique 31, comprenant la machine électrique 3, par exemple un alternateur, comprend une section mobile, nommée rotor, engagée solidairement en rotation avec l'arbre 2 du moteur 1 et une section fixe, nommée stator, délivrant une alimentation électrique, caractérisée par une tension électrique u et un courant électrique i, au réseau électrique 4. Par exemple, la plage de puissance de l'alternateur est de 50 kW à 75 kW.

On notera que dans un mode de réalisation, plusieurs machines électriques peuvent être entraînées par le moteur 1, pour alimenter électriquement le réseau électrique 4 et le cas échéant d'autres réseaux électriques de l'aéronef.

Le réseau électrique 4 comprend un ensemble 5 de charge(s) adaptée(s) pour consommer du courant électrique, et optionnellement une ou plusieurs sources d'alimentation électrique 6 autres que la machine électrique 3 (par exemple d'autres machines électriques entraînées par le moteur 1 ou par un autre moteur). On notera que le réseau électrique 4 compte dans certains cas une ou plusieurs batteries, chaque batterie étant considérée comme charge 5 ou comme source 6 en fonction de son état.

On nommera ci-dessous « équipements » les équipements électriques de type sources électriques ou charges électriques du système 10.

Le bloc de gestion d'énergie 8 est adapté pour équilibrer les demandes en alimentation électrique des charges et la fourniture en alimentation électrique des sources d'énergie comprenant la machine électrique 3 et les sources du réseau électrique 6, y compris les batteries, à l'échelle du système et plus généralement de l'aéronef, notamment quand une partie de la génération électrique devient indisponible (panne d'un moteur, panne électrique) ou quand la demande d'alimentation électrique s'accroît beaucoup.

Dans un mode de réalisation de l'invention, la gestion de l'énergie présente sur le système 10 et plus globalement sur l'aéronef comprend deux composantes :
- une composante distribuée, sans coordination centrale, qui gère le délestage (i.e ; l'arrêt de leur consommation électrique à court terme des principales charges, la contribution de chaque source et assure une fonction anti-surtension ; cette composante distribuée est par exemple mise en oeuvre par des contrôleurs d'équipements ;
- une composante centralisée qui assure la tenue de l'objectif d'état de charge des batteries à moyen/long terme, l'ajustement du niveau de tension u du réseau 4, la mise en service et l'arrêt de sources électriques secondaires telles l'APU et l'adéquation de la capacité de génération avec les besoins à moyen/long terme des charges du réseau électrique 4 ; cette composante centralisée est par exemple mise en oeuvre par le bloc de gestion de l'énergie 8 ou par des modules distincts reliés au bloc de gestion de l'énergie 8.

La composante centralisée de gestion de l'énergie recueille les données représentatives de la configuration électrique du réseau électrique 4 à chaque instant, et anticipe sur ses possibles évolutions pouvant résulter du déclenchement de protections électriques.

### Description de la composante distribuée de gestion de l'énergie :

Sur chaque partie distincte du réseau électrique 4 (réseau protection givre dédié, réseau droit, réseau gauche), la tension électrique est laissée libre d'évoluer en fonction de la charge du réseau.

Les charges susceptibles d'opérer un délestage court terme (par exemple la fonction de protection givre, dont le temps caractéristique est au moins la seconde) sont contrôlées comme l'association en parallèle d'une charge à impédance constante et d'une source. La source est normalement à zéro, mais si la tension baisse beaucoup, elle va aider virtuellement à fournir la puissance nécessaire. Pour les charges de type « tout ou rien », seul un seuil de tension est programmable, avec une hystérésis pour éviter une instabilité due au simple délestage de la charge. Pour les alternateurs et les charges plus flexibles, il peut y avoir une réduction progressive de la puissance consommée.

Les alternateurs ont chacun une caractéristique courant-tension LC déterminée représentée en trait plein en figure 2 : cette caractéristique fait passer l'alternateur en surcharge (surcharge normale si elle est permise) lorsque la tension approche du minimum autorisé HVₘᵢₙ.

Cette caractéristique électrique, référencée LC sur la figure 1, mise en oeuvre par un alternateur, a été préalablement définie par programmation du bloc de gestion d'énergie 8 et est appliquée par pilotage de l'alternateur par le contrôleur 7.

L'invention en objet comme explicité plus loin autorise cependant l'alternateur 3 à déroger transitoirement à cette caractéristique dans certaines conditions, sans que cela soit associé à une panne de génération électrique.

Lorsque la tension u du réseau 4 atteint le minimum autorisé, toutes les sources alimentant le réseau 4 sont à leur puissance maximale (potentiellement celle de la surcharge court terme), et toutes les charges délestables qui sont en bon état de marche se sont temporairement délestées. La puissance traversant le défaut est maximale, ce qui permet de faire fonctionner sélectivement les protections, fusibles et contacteurs. Chaque alternateur et chaque charge ajuste au fil du temps sa consommation pour s'auto-protéger, en essayant de céder le maximum de puissance au réseau 4.

Inversement, lorsque la tension u du réseau 4 monte anormalement (par exemple du fait d'un défaut de génération électrique ou à cause d'une charge 5 régénérative seule sur le réseau 4) jusqu'à atteindre HVₘₐₓ, les alternateurs réduisent la puissance fournie, jusqu'à zéro, voire s'ils en sont capables, injectent la puissance excédentaire dans l'arbre moteur.

L'étendue signalée par Δu en figure 2 représente la plage de tension « normale », ici 250-280V, dans laquelle les sources ne se mettent pas à régénérer. Dans cette plage, les sources se partagent la puissance à fournir, qui peut être nulle.

Les charges qui en sont capables (protection givre) peuvent se mettre d'elles mêmes brièvement à consommer pour éviter une surtension. Elles le font de manière échelonnée à différents seuils de tension. Pour que cette protection fonctionne, les composants doivent réagir en quelques dizaines de microsecondes. Cette protection peut être nécessaire lorsqu'une grosse charge est brutalement déconnectée. Elle n'agit que pendant quelques millièmes ou centièmes de secondes, le temps que la génération électrique régule la puissance.

Chaque réseau électrique dispose au moins d'un alternateur capable de faire de la régénération dans l'arbre moteur avec une puissance suffisante pour compenser la panne de régulation d'un autre alternateur, et d'un élément de protection givre de forte puissance susceptible d'endiguer toute surtension liée à la réversibilité du réseau.

La composante distribuée de gestion d'énergie permet de stabiliser et d'anticiper la réaction du réseau électrique à des évolutions de charge imprévues, même si elles résultent d'équipements non intégrés à la gestion de l'énergie (faible puissance, ou forte priorité comme les actionneurs de commandes de vol), ou de pannes imprévisibles.

Les paramètres de la composante distribuée de gestion d'énergie propres à chaque équipement sont réglés par la composante centralisée de gestion d'énergie, tels que :
- seuil de tension de passage en puissance maximum (source), ou en délestage maximum (charge) ;
- puissance maximale offerte lorsque la tension est supérieure au seuil ;
- tension à laquelle la source ne fournit plus aucune puissance, ou à laquelle la charge n'est plus du tout délestée ;
- seuil de tension à laquelle une source réversible ou une charge spécifique va intervenir massivement pour éviter une surtension.

Ainsi, la forme générale de la caractéristique courant/tension pour chaque équipement est similaire à la loi de l'alternateur de la figure 2.

### Description de la composante centralisée de gestion de l'énergie :

La composante centralisée de gestion de l'énergie optimise le fonctionnement du réseau électrique 4 en réalisant une gestion des sources à un horizon de quelques minutes, et en réglant périodiquement les paramètres des caractéristiques des différentes sources et des charges principales.

Il faut noter dès à présent que, même si les paramètres choisis sont très mauvais, ils doivent être validés par les sources, et celles-ci délivreront donc toujours la puissance nécessaire aux charges à une tension faisant partie de la gamme normale 250 à 280 V. En régime normal, cette composante apporte le positionnement de la tension u au niveau le plus proche possible de 280 V afin de minimiser le courant, et de maximiser le rendement (les alternateurs en particulier sont fortement démagnétisés pour fournir du 270 V, et autoriser une tension plus élevée augmente directement leur rendement).

Dans un mode de réalisation de l'invention, le contrôleur de machine électrique 7 est adapté pour stocker au moins une consigne de régulation des pics de couple. Cette consigne est fonction de la valeur courante d'information(s) caractérisant l'état du moteur 1. Le contrôleur de machine électrique 7 est en outre adapté pour collecter régulièrement la valeur courante d'information(s) caractérisant l'état du moteur 1, et pour déterminer, en fonction de cette valeur courante, la consigne de régulation des pics de couple applicable. Le contrôleur de machine électrique 7 est en outre adapté pour piloter le fonctionnement de l'alternateur 3 de manière à ce que l'alternateur fonctionne en respectant la consigne déterminée.

L'information caractérisant l'état du moteur comprend par exemple :
- la vitesse de rotation de l'arbre 2 du moteur 1 ; et/ou
- la capacité courante du moteur 1 à absorber un pic de couple dans une fenêtre temporelle donnée ; par exemple dans un mode de réalisation, le moteur indique directement la variation de prélèvement mécanique qu'il peut accepter, à interpréter selon une échelle de temps convenue lors de la phase de conception, cette échelle de temps permettant de différencier ce phénomène d'une vibration ; et/ou
- le taux de compression de l'air dans le moteur ;
- un débit de carburant relatif au moteur ;
- un seuil de variation de couple prélevé calculé par le moteur.

La consigne déterminée par le contrôleur de machine électrique 7 impose dans un mode de réalisation une valeur maximale de couple (le couple étant considéré en valeur absolue) et/ou une valeur maximale de vitesse de variation de couple (la vitesse de variation étant considérée en valeur absolue), en fonction de ces informations caractérisant l'état courant du moteur 1.

On notera qu'en outre, le maximum de couple est fixé par la partie horizontale antérieure à HVₘᵢₙ de la loi représentée en figure 2 qui limite dans tous les cas la puissance à un certain niveau. Dans un mode de réalisation, chaque alternateur et chaque charge est adapté pour ajuster au fil du temps sa production ou sa consommation pour s'auto-protéger, en essayant de céder le maximum de puissance au réseau 4. Dans un mode de réalisation, la puissance prélevée par l'alternateur sur l'arbre moteur est dynamiquement ajustée par celui-ci en fonction des informations venant du moteur, afin d'assurer la pérennité de la fourniture d'énergie.

Par exemple, dans un mode de réalisation :
- lorsque la vitesse de rotation est supérieure à un seuil wₘₐₓ, aucune restriction quant à la valeur de couple ou à la vitesse de variation de couple n'est imposée ; et
- lorsque la vitesse de rotation est inférieure au seuil wₘₐₓ, la consigne comprend l'indication de limiter le couple à une valeur maximale de couple ┌ₘₐₓ, qui optionnellement est fonction de la vitesse de rotation et/ou la consigne comprend l'indication de limiter la vitesse de variation de couple à une valeur maximale de variation de couple d┌ₘₐₓ, qui optionnellement est fonction de la vitesse de rotation.

Le réseau électrique 4 est assimilable à un condensateur. Sa tension u est régulée en asservissant le courant i qui arrive sur le réseau 4 de manière à ce que la tension u soit fixe, par exemple à l'aide d'un régulateur proportionnel-intégral.

Le courant est asservi sur une valeur objective de courant calculée, qui dépend de la tension du réseau. Sur une plage étroite de tensions « normales » [HVₘᵢₙ, HVₘᵢₙ + Δu]= [250-280V] DC), la caractéristique courant-tension de l'alternateur 3 impose à l'alternateur de passer de la pleine charge à une charge nulle, ce qui garantit l'existence d'un point d'équilibre dans cette plage de tension à partir du moment où la capacité de génération électrique gérée à l'aide de la fonction de gestion d'énergie suffit à couvrir les besoins. Cela ne suffit pas à garantir la stabilité du réseau sur ce point d'équilibre, en particulier lorsqu'il y a plusieurs sources. En effet, les déséquilibres entre l'offre et la demande conduisent à des variations extrêmement rapides de la tension du réseau. Pour les puissances unitaires inférieures à 100 kW et des charges typiques, l'ordre de grandeur de 1 ms de temps de régulation suffit à assurer la stabilité de la régulation en tension avec une quantité raisonnable de condensateurs.

Dans un mode de réalisation de l'invention, le contrôleur de machine électrique 7 est adapté pour, lorsque la vitesse de rotation w de l'arbre est inférieure au seuil wₘₐₓ par exemple, piloter le fonctionnement de l'alternateur 3 de manière à ce que ce dernier applique, en dérogation à la caractéristique de fonctionnement usuelle de l'alternateur représentée en trait plein en figure 2 et seulement lorsque la vitesse de rotation est inférieure à wₘₐₓ, la caractéristique de fonctionnement correspondant à la partie additionnelle représentée en tirets sur la figure 2. Cette saturation de la puissance de l'alternateur 3 correspond à une consigne de limitation du couple. Si le réseau 4 requiert une puissance électrique telle que la tension atteint une tension correspondant à cette partie en tirets, la fonction de gestion de l'énergie augmentera la contribution de sources électriques 6 autres que l'alternateur 3 jusqu'à ce qu'un point de fonctionnement sur la partie en traits pleins soit à nouveau atteint par l'alternateur 3.

Si la variation de puissance électrique demandée par le réseau 4 excède ce que l'alternateur 3 peut faire en 1 ms en respectant la consigne de limitation de variation de couple, l'alternateur 3 mettra plus de temps à rejoindre son point de fonctionnement sur la partie en trait plein.

Le régime transitoire commence au bout d'une milliseconde, échelle de temps à laquelle les déséquilibres entre production et consommation d'électricité ne sont plus masqués par la capacité du réseau. La fonction distribuée de gestion de l'énergie va assurer qu'une autre source disponible sur le même réseau électrique 4 assure la fourniture d'énergie, potentiellement par une surcharge court terme (on considère que ce régime peut typiquement durer 0,5 s). Au fur et à mesure que l'alternateur 3 se dirige vers son point d'équilibre, l'autre source réduit progressivement sa contribution.

Le décalage net des échelles de temps de réaction des différentes sources est également une manière connue d'assurer la rejointe stable du point d'équilibre.

Dans un mode de réalisation de l'invention, la machine électrique 3 est de type alternateur à aimants. La source électrique 31 comprend un redresseur actif adapté pour contraindre ledit alternateur à aimants à appliquer la consigne relative au couple.

Par exemple, l'alternateur à aimants permanents comprend des bobinages enroulés sur le stator et le redresseur actif est adapté pour appliquer à ces bobinages de l'alternateur une tension alternative dont les valeurs de phase et d'amplitude sont adaptables et déterminées en fonction de la consigne à appliquer relativement au couple. Ces deux degrés de liberté permettent de régler indépendamment les valeurs de la tension u du réseau 4 et du flux magnétique circulant dans l'alternateur 3.

Le produit de la vitesse de rotation et du flux de l'alternateur est proportionnel à la force électromotrice. Multipliée par le courant débité ou produit par l'alternateur, celle-ci représente en fonctionnement normal la quasi-totalité de la puissance mécanique nécessaire à l'alternateur 3. L'alternateur 3 subissant une vitesse de rotation imposée, le contrôle du flux permet de compenser les variations de celle-ci en stabilisant la force électromotrice. Lorsque l'alternateur est entraîné à grande vitesse, un déphasage courant-tension permet de faire circuler en court-circuit entre le redresseur actif et l'alternateur des courants démagnétisants, qui réduisent le flux. Ces courants peuvent être importants même si les courants échangés i avec le réseau de bord sont faibles.

On peut donc également exprimer les deux degrés de liberté évoqués en distinguant le courant échangé entre le redresseur et l'alternateur et le courant échangé entre le redresseur et le réseau 4, qui peuvent être pilotés indépendamment l'un pour s'adapter à des conditions d'entraînement mécanique changeantes et imposées, et l'autre pour s'adapter à une consommation d'énergie variable sur le réseau électrique.

Ainsi l'adaptation de la valeur de phase de la tension alternative permet de réduire les pics de couple appliqués par des changements de charge électrique, selon lesquels le courant i varie, donc le couple varie (en effet la puissance étant le produit de la vitesse de rotation par le flux et par le courant, le produit du flux par le courant est proportionnel au couple (le produit couple-vitesse est aussi égal à la puissance)). Dans un exemple de pilotage, la phase est pilotée par commande vectorielle. La puissance échangée, décomposée orthogonalement en une puissance active (qui est celle échangée avec le réseau 4) et une puissance réactive (servant à réguler le flux) sont réglées indépendamment par le redresseur actif.

Et l'adaptation de la valeur de l'amplitude de la tension alternative permet de piloter la tension du réseau 4 de manière à compenser les variations de charge du réseau 4 et ainsi réduire les pics de couple entre l'alternateur 3 et l'arbre 2 dus aux variations de charge du réseau 4, en respectant la caractéristique représentée en tirets sur la figure 2. Par exemple, si w < wₘₐₓ, l'amplitude de la tension alternative du redresseur actif est pilotée pour garantir le respect de la caractéristique représentée en tirets sur la figure 2, dans un exemple de limitation de couple.

Dans un exemple de limitation de la variation de couple, l'évolution de la tension et du courant pour limiter la variation de couple lorsque la demande en courant croît brusquement ressemblerait à la courbe T représentée en figure 2 par des pointillés.

Ainsi, en partant du point A pour aller à un niveau de puissance matérialisé par la ligne en pointillés, la valeur du courant est accrue, moins vite qu'il ne faudrait tandis que la tension chute puisque les sources ne délivrent pas assez de courant. Le courant image du couple continue d'augmenter de manière contrôlée et lorsqu'il dépasse le seuil d'équilibre, la tension se met à remonter. Puis le système trouve un nouveau point d'équilibre placé sur la courbe LC représentée en traits pleins.

On notera que la régulation du fonctionnement de l'alternateur 3 par un redresseur actif permet une régulation de l'ordre de 1 ms car l'usage du redresseur actif permet de contrer l'effet de l'inductance présentée par l'alternateur en le mettant en court-circuit. Si des oscillations se produisent, elles seront fortement amorties quand le courant i décroît ce qui assure une convergence rapide.

Ainsi selon l'invention, le couple entre la section tournante de la machine électrique 3 et l'arbre 2, qui tourne de manière solidaire (optionnellement au travers d'un relais d'accessoires qui permet d'adapter la vitesse en appliquant un ratio fixe et de déporter physiquement l'arbre), est piloté (la valeur du couple est limitée quand elle devient excessive ou varie trop vite) de manière à fournir la puissance électrique nécessaire.

Un procédé selon l'invention permet que des valeurs de couple plus élevées que la solution décrite dans EP 2 415 991 soient acceptés, et combine dans la consigne des valeurs de couple maximum et des variations de valeurs de couple, ce qu'un système purement mécanique ne sait pas faire. Il s'adapte à l'état du moteur, par exemple à la vitesse de rotation du moteur, permettant ainsi de prendre en compte que le couple nécessaire pour fournir une puissance électrique décroît lorsque la vitesse de rotation du moteur augmente et ne limitant pas inutilement la production électrique lors des régimes normaux de vol.

La solution EP 2415991 limite le couple à une valeur maximale fixée. Cette limite correspond à une puissance proportionnelle à la vitesse et il faut la placer assez haut pour que le système puisse délivrer la puissance nécessaire à bas régime. Lorsque la consigne est proportionnelle à l'inverse de la vitesse, le dispositif peut être utilisé pour limiter la puissance au lieu de limiter seulement le couple.

Dans un autre mode de réalisation, distinct de l'invention, la machine électrique 3 est un alternateur à rotor bobiné, et l'invention est mise en oeuvre à l'aide d'un contrôleur de machine électrique 7 de type Generator Control Unit appelé GCU adapté pour contrôler le flux dans le rotor bobiné de l'alternateur. La vitesse de rotation est toujours imposée, mais la valeur du flux est adaptée en agissant sur le courant du rotor par l'intermédiaire du circuit d'excitation, alimentant le bobinage du rotor (Il suffit de modifier sa tension pour changer le courant qui circule dans le bobinage du rotor, et donc le flux). Il n'est normalement pas nécessaire d'introduire une composante de courant directe servant à réduire le flux via le stator, ce qui permet d'utiliser un redresseur simple à diodes, ou d'utiliser directement le courant alternatif.

Un redresseur simple à diodes impose un taux d'harmoniques plus élevé qu'un redresseur actif à transistors dans les formes d'onde de courant circulant dans le stator. Les pertes sont donc un peu plus élevées.

Dans cette implémentation, le GCU est responsable de la régulation de tension, ou de la régulation courant-tension du réseau 4 conformément à la gestion de l'énergie exposée ci-dessus. Pour cela il mesure la tension du point de régulation conformément à la figure 2, applique une régulation (typiquement un régulateur proportionnel intégral), qui agit sur l'excitation.

Il existe des GCU plus évolués qui peuvent réagir plus vite aux variations de charge ou de vitesse d'entraînement en fonction d'une mesure du courant d'excitation et du courant du stator.

Le couple mécanique produit par l'alternateur associé à un contrôleur GCU 7 est proportionnel au produit du courant au stator et du flux, lequel est contrôlé par l'excitation. Le contrôleur GCU 7 peut donc limiter ce couple en agissant sur le flux, et limiter la variation de couple en agissant sur la variation du flux. L'inductance relativement élevée du circuit d'excitation fait que la variation du flux est assez naturellement limitée, mais un appel de puissance brutal provoque une chute de tension qui fait augmenter le courant. Dans ce cas de figure, le GCU 7 est adapté pour baisser initialement le flux pour maîtriser la variation de couple, puis l'augmenter progressivement jusqu'au niveau requis pour avoir la tension requise au nouveau niveau de puissance.

On notera que, dans le cas d'un contrôleur 7 agissant sur le flux d'un rotor bobiné, le contrôleur 7 est relié à la source électrique 31, comme représenté en figure 1. Dans le cas d'un contrôleur 7 pilotant un redresseur actif de la source électrique 31, le contrôleur 7 est généralement intégré physiquement au redresseur actif.

On notera que les différents modes de réalisation de l'invention présentés ci-dessus peuvent être combinés entre eux.

Dans le mode de réalisation décrit en référence aux figures, la machine électrique est un alternateur à rotor bobiné et le réseau électrique est alternatif. Néanmoins, l'invention peut être mise en oeuvre avec tout type de machine électrique, par exemple avec une machine électrique de type alternateur à aimants permanents, une machine asynchrone à induction qui dans un mode de réalisation sera pilotée par un redresseur actif, avec une machine synchrone polyphasée : les variations de vitesse d'entrainement et les variations de charge sont compensées par 2 degrés de liberté comme décrit plus haut.

Le travail menant à cette invention a reçu un financement du septième programme-cadre de la Communauté européenne (FP7/2007-2013) pour l'initiative technologique conjointe Clean Sky au titre de la convention de subvention n°CSJU-GAM-ED-2008-001.

## Revendications

1. Procédé de protection contre les pics de couple dans un système (10) comprenant un ensemble électrique comportant une ou des charges électriques (5), un moteur (1) adapté pour mettre un arbre du moteur en rotation, une source électrique (31), comprenant au moins une machine électrique (3) et un redresseur, adaptée pour alimenter électriquement l'ensemble électrique, ladite machine électrique (3) comportant une section fixe et une section tournante adaptée pour tourner avec l'arbre, ledit procédé comportant une étape de pilotage du fonctionnement de la machine électrique contraignant le mouvement de rotation de la section tournante avec l'arbre à respecter une consigne relative au couple de la section tournante appliqué à l'arbre du moteur, ladite consigne étant adaptée en fonction d'au moins un élément caractérisant un état courant de fonctionnement du moteur, **caractérisé en ce que** le redresseur est un redresseur actif, et **en ce que** l'étape de pilotage comprend :
- la détermination de la phase et de l'amplitude d'une tension alternative à appliquer à la section tournante ou à la section fixe de la machine électrique, et
- l'application, par le redresseur actif, de ladite tension alternative à ladite section tournante ou fixe.

2. Procédé de protection contre les pics de couple selon la revendication 1, selon lequel ladite consigne est fonction d'au moins un élément caractérisant un état de fonctionnement courant du moteur (1) parmi la vitesse de rotation de l'arbre du moteur, un taux de compression de l'air dans le moteur, un indicateur de capacité à accepter un prélèvement calculé par le moteur, un débit de carburant relatif au moteur, un seuil de variation de couple prélevé calculé par le moteur.

3. Procédé de protection contre les pics de couple selon la revendication 1 ou 2, selon lequel la consigne fixe au moins une valeur-seuil parmi une valeur-seuil maximale de couple et une valeur-seuil minimale de couple.

4. Procédé de protection contre les pics de couple selon la revendication 1, 2 ou 3, selon lequel la consigne fixe au moins une valeur-seuil parmi une valeur-seuil maximale de vitesse de variation de couple et une valeur-seuil minimale de vitesse de variation de couple.

5. Procédé de protection contre les pics de couple selon l'une quelconque des revendications précédentes, selon lequel une pluralité d'équipements parmi la source électrique (31) et les charges (5) sont pilotés de manière à respecter chacun une courbe liant la tension aux bornes de l'équipement et le courant traversant l'équipement, présentant une première zone avec un plateau de courant pour des valeurs de tension dans une plage comprenant une tension minimale de fonctionnement, une deuxième zone dans laquelle le courant décroît lorsque la tension augmente au-delà de ladite plage, et une troisième zone avec un plateau de courant pour des valeurs de tension au-delà de la deuxième zone.

6. Procédé de protection contre les pics de couple selon l'une quelconque des revendications précédentes, selon lequel le moteur (1) est une turbomachine.

7. Module de protection (7) contre les pics de couple destiné à un système (10) comprenant un ensemble électrique comportant une ou des charges électriques (5), un moteur (1) adapté pour mettre un arbre du moteur en rotation, une source électrique (31), comprenant au moins une machine électrique (3) et un redresseur, adaptée pour alimenter électriquement l'ensemble électrique, ladite machine électrique comportant une section fixe et une section tournante adaptée pour tourner solidairement avec l'arbre, ledit module de protection étant adapté, pour piloter le fonctionnement de la machine électrique en contraignant le mouvement de rotation de la section tournante avec l'arbre à respecter une consigne relative au couple de la section tournante appliqué à l'arbre du moteur , ledit module étant adapté pour déterminer un élément caractérisant un état de fonctionnement courant du moteur, et pour adapter en outre ladite consigne en fonction d'au moins ledit élément, **caractérisé en ce que** le redresseur est un redresseur actif, et **en ce que** le module de protection est adapté pour :
- déterminer, en fonction de la consigne relative au couple, des données de définition de la phase et de l'amplitude d'une tension alternative à appliquer à la section tournante ou à la section fixe de la machine électrique, et
- fournir lesdites données au redresseur actif en vue de l'application, par le redresseur actif, de ladite tension alternative à ladite section tournante ou fixe.

8. Module de protection (7) contre les pics de couple selon la revendication 7, dans lequel ladite consigne est fonction d'au moins un élément caractérisant un état de fonctionnement courant du moteur (1) parmi la vitesse de rotation de l'arbre du moteur, un taux de compression de l'air dans le moteur, un indicateur de capacité à accepter un prélèvement calculé par le moteur, un débit de carburant relatif au moteur, un seuil de variation de couple prélevé calculé par le moteur.

9. Module de protection (7) contre les pics de couple selon la revendication 7 ou 8, dans lequel la consigne fixe au moins une valeur-seuil parmi une valeur-seuil maximale de couple et une valeur-seuil minimale de couple.

10. Module de protection (7) contre les pics de couple selon la revendication 7, 8 ou 9, dans lequel la consigne fixe au moins une valeur-seuil parmi une valeur-seuil maximale de vitesse de variation de couple et une valeur-seuil minimale de vitesse de variation de couple.

11. Aéronef comportant un système (10) comprenant un ensemble électrique comportant une ou des charges électriques (5), une turbomachine (1) adaptée pour mettre un arbre du moteur en rotation, une source électrique (31) comprenant au moins une machine électrique (3) et adaptée pour alimenter électriquement l'ensemble électrique, ladite source électrique comportant une section fixe et une section tournante adaptée pour tourner solidairement avec l'arbre, et un module (7) de protection contre les pics de couple, selon lequel ledit module de protection (7) est un module selon l'une quelconque des revendications 7 à 10.

## Patentansprüche

1. Verfahren zum Schutz gegen Drehmomentspitzen in einem System (10), das aufweist eine elektrische Einrichtung, welche aufweist eine elektrische Ladung oder elektrische Ladungen (5), einen Motor (1), der angepasst ist, um eine Welle des Motors in Rotation zu versetzen, eine elektrische Quelle (31), die wenigstens eine elektrische Maschine (3) und einen Gleichrichter aufweist und die angepasst ist, um die elektrische Einrichtung elektrisch zu versorgen, wobei die besagte elektrische Maschine (3) einen Fest-Abschnitt und einen Rotations-Abschnitt aufweist, der angepasst ist, um sich mit der Welle mitzudrehen, wobei das Verfahren aufweist einen Schritt der Steuerung des Betriebs der elektrischen Maschine unter Zwangsbewirken, dass die Rotationsbewegung des Rotations-Abschnitts mit der Welle einen Sollwert bezüglich des Drehmoments des Rotations-Abschnitts einhält, das auf die Welle des Motors aufgebracht wird, wobei der besagte Sollwert angepasst ist in Abhängigkeit von wenigstens einem Element, das einen momentanen Betriebszustand des Motors charakterisiert, **dadurch gekennzeichnet, dass** der Gleichrichter ein aktiver Gleichrichter ist und dass der Steuerungs-Schritt aufweist:
- die Ermittlung der Phase und der Amplitude einer Wechsel-Spannung, die auf den Rotations-Abschnitt oder auf den Fest-Abschnitt der elektrischen Maschine anzuwenden ist, und
- die Anwendung, durch den aktiven Gleichrichter, der besagten Wechsel-Spannung auf den besagten Rotations- oder Fest-Abschnitt.

2. Verfahren zum Schutz gegen Drehmomentspitzen gemäß Anspruch 1, wobei der besagte Sollwert abhängig ist von wenigstens einem Element, das einen momentanen Betriebszustand des Motors (1) charakterisiert, unter der Rotationsgeschwindigkeit der Welle des Motors, einer Quote der Verdichtung der Luft in dem Motor, einem Indikator der Kapazität, die einer berechneten Entnahme durch den Motor nachkommt, einem Abgang an Treibstoff bezüglich des Motors, einer berechnete Grenze der Änderung des Drehmoments, das von dem Motor entnommen wird.

3. Verfahren zum Schutz gegen Drehmomentspitzen gemäß Anspruch 1 oder 2, wobei der besagte Sollwert wenigstens einen Grenzwert festlegt unter einem maximalen Drehmoment-Grenzwert und einem minimalen Drehmoment-Grenzwert.

4. Verfahren zum Schutz gegen Drehmomentspitzen gemäß Anspruch 1, 2 oder 3, wobei der besagte Sollwert wenigstens einen Grenzwert festlegt unter einem maximalen Drehmomentvariationsgeschwindigkeitsgrenzwert und einem minimalen Drehmomentvariationsgeschwindigkeitsgrenzwert.

5. Verfahren zum Schutz gegen Drehmomentspitzen gemäß irgendeinem der vorhergehenden Ansprüche, wobei eine Mehrzahl von Einrichtungen unter der elektrischen Quelle (31) und den Ladungen (5) gesteuert werden, um jeweils eine Kennlinie einzuhalten, welche die Klemmspannung der Einrichtung und den Strom, der die Einrichtung durchfließt, verknüpft, aufweisend eine erste Zone mit einem Stromplateau für die Spannungswerte in einem Bereich, der eine minimale Betriebsspannung aufweist, eine zweite Zone, in welcher der Strom abnimmt, wenn die Spannung zunimmt über den besagten Bereich hinaus, und eine dritte Zone mit einem Stromplateau für Spannungswerte über die zweite Zone hinaus.

6. Verfahren zum Schutz gegen Drehmomentspitzen gemäß irgendeinem der vorhergehenden Ansprüche, wobei der Motor (1) eine Turbomaschine ist.

7. Modul zum Schutz (7) gegen Drehmomentspitzen, das für ein System (10) bestimmt ist, das aufweist eine elektrische Einrichtung, die aufweist eine elektrische Ladung oder elektrische Ladungen (5), einen Motor (1), der angepasst ist, um eine Welle des Motors in Rotation zu versetzen, eine elektrische Quelle (31), die aufweist wenigstens eine elektrische Maschine (3) und einen Gleichrichter und die angepasst ist, um die elektrische Einrichtung elektrisch versorgen, wobei die besagte elektrische Maschine aufweist einen Fest-Abschnitt und einen Rotations-Abschnitt, der angepasst ist zum gemeinsamen Mitdrehen mit der Welle, wobei das Schutz-Modul angepasst ist, um den Betrieb der elektrischen Maschine zu steuern unter Zwangsbewirken, dass die Rotationsbewegung des Rotations-Abschnitts mit der Welle einen Sollwert bezüglich des Drehmoments des Rotations-Abschnitts einhält, das auf die Welle des Motos aufgebracht wird, wobei das Modul angepasst ist zum Ermitteln eines Elements, das einen momentan Betriebszustand des Motors charakterisiert, und zum Anpassen ferner des Grenzwerts in Abhängigkeit von dem besagten wenigstens einen Element, **dadurch gekennzeichnet, dass** der Gleichrichter ein aktiver Gleichrichter ist und dass das Schutz-Modul angepasst ist zum:
- Ermitteln, in Abhängigkeit von dem Sollwert bezüglich des Drehmoments, von Daten zur Definition der Phase und der Amplitude einer Wechsel-Spannung, die auf den Rotations-Abschnitt oder auf den Fest-Abschnitt der elektrischen Maschine anzuwenden ist, und
- Zuführen der besagten Daten an den aktiven Gleichrichter zwecks der Anwendung, durch den aktiven Gleichrichter, der besagten Wechsel-Spannung auf den besagten Rotations- oder Fest-Abschnitt.

8. Modul zum Schutz (7) gegen Drehmomentspitzen gemäß Anspruch 7, wobei der besagte Sollwert abhängig ist von wenigstens einem Element, das einen momentanen Betriebszustand des Motors (1) charakterisiert, unter der Rotationsgeschwindigkeit der Welle des Motors, einer Quote der Verdichtung der Luft in dem Motor, einem Indikator der Kapazität, die einer berechneten Entnahme durch den Motor nachkommt, einem Abgang an Treibstoff bezüglich des Motors, einer berechneten Grenze der Änderung des Drehmoments, das von dem Motor entnommen wird.

9. Modul zum Schutz (7) gegen Drehmomentspitzen gemäß Anspruch 7 oder 8, wobei der Sollwert wenigstens einen Grenzwert festlegt unter einem maximalen Drehmomentgrenzwert und einem minimalen Drehmomentgrenzwert.

10. Modul zum Schutz (7) gegen Drehmomentspitzen gemäß Anspruch 7, 8 oder 9, wobei der besagte Sollwert wenigstens einen Grenzwert festlegt unter einem maximalen Drehmomentvariationsgeschwindigkeitsgrenzwert und einem minimalen Drehmomentvariationsgeschwindigkeitsgrenzwert.

11. Luftfahrzeug mit einem System (10), das aufweist eine elektrische Einrichtung, die aufweist eine elektrische Ladung oder elektrische Ladungen (5), eine Turbomaschine (1), die angepasst ist, um eine Welle des Motors in Rotation zu versetzen, eine elektrische Quelle (31), die aufweist wenigstens eine elektrische Maschine (3) und die angepasst ist, um die elektrische Einrichtung elektrisch zu versorgen, wobei die elektrische Quelle aufweist einen Fest-Abschnitt und einen Rotations-Abschnitt, der angepasst ist, um gemeinsam mit der Welle mitzudrehen, und ein Modul (7) zum Schutz gegen die Drehmomentspitzen, wobei das besagte Schutz-Modul (7) ein Modul gemäß irgendeinem der Ansprüche 7 bis 10 ist.

## Claims

1. A protective method against torque peaks in a system (10) comprising an electric assembly including one or more electric loads (5), a motor (1) adapted for setting a shaft of the motor into rotation, an electric source (31), comprising at least one electric machine (3) and a rectifier, adapted for electrically powering the electric assembly, said electric machine (3) including a fixed section and a rotating section adapted for rotating with the shaft, said method being including a step for controlling the operation of the electric machine forcing the rotary movement of the rotating section with the shaft to observe an instruction relating to the torque of the rotating section applied to the shaft of the motor, said instruction being adapted depending on at least one element characterizing a current operating state of the motor, **characterized in that** the rectifier is an active rectifier, and **in that** the controlling step comprises:
- the determination of the phase and the amplitude of an alternating voltage to be applied to the rotating section or to the fixed section of the electric machine, and
- the application, by the active rectifier, of said alternating voltage to said rotating or fixed section.

2. The protective method against torque peaks according to claim 1, wherein said instruction depends on at least one element characterizing a current operating state of the motor (1) from among the speed of rotation of the shaft of the motor, an air compression rate in the motor, an indicator of the capability of accepting a power withdrawal calculated by the motor, a fuel flow rate relating to the motor, a withdrawn torque variation threshold calculated by the motor.

3. The protective method against torque peaks according to claim 1 or 2, wherein the instruction sets at least one threshold value from among a maximum torque threshold value and a minimum torque threshold value.

4. The protective method against torque peaks according to claim 1, 2 or 3, wherein the instruction sets at least a one threshold value from among a maximum torque variation rate threshold value and a minimum torque variation rate threshold value.

5. The protective method against torque peaks according to any of the preceding claims, wherein a plurality of pieces of equipment from among the electric source (31) and the loads (5) is controlled so that each observes a curve relating the voltage on the terminals of a piece of equipment to the current flowing through the piece of equipment, having a first area with a current plateau for voltage values in a range comprising a minimum operating voltage, a second area in which the current decreases when the voltage increases beyond said range, and a third area with a current plateau for voltage values beyond the second area.

6. The protective method against torque peaks according to any of the preceding claims, wherein the motor (1) is a turbomachine.

7. A protective module (7) against torque peaks intended for a system (10) comprising an electric assembly including one or more electric loads (5), a motor (1) adapted for setting a shaft of the motor into rotation, an electric source (31), comprising at least one electric machine (3) and a rectifier, adapted for electrically powering the electric assembly, said electric machine including a fixed section and a rotating section adapted for rotating interdependently with the shaft, said protective module being adapted for controlling the operation of the electric machine by forcing the rotary movement of the rotating section with the shaft to observe an instruction relating to the torque of the rotating section applied to the shaft of the motor, said module being adapted for determining an element characterizing a current operating state of the motor, and for further adapting said instruction depending on at least said element, **characterized in that** the rectifier is an active rectifier, and **in that** the protective module is adapted for:
- determining, depending on the instruction relating to the torque, definition data for the phase and for the amplitude of an alternating voltage to be applied to the rotating section or to the fixed section of the electric machine, and
- providing said data to the active rectifier with view to applying said alternating voltage, by the active rectifier, to said rotating or fixed section.

8. The protective module (7) against torque peaks according to claim 7, wherein said instruction depends on at least one element characterizing a current operating state of the motor (1) from among the speed of rotation of the shaft of the motor, an air compression rate in the motor, an indicator of the capability of accepting a calculated power withdrawal by the motor, a fuel flow rate relating to the motor, a calculated withdrawn torque variation threshold by the motor.

9. The protective module (7) against torque peaks according to claim 7 or 8, wherein the instruction sets at least one threshold value from among a maximum torque threshold value and a minimum torque threshold value.

10. The protective module (7) against torque peaks according to claim 7, 8 or 9, wherein the instruction sets at least one threshold value from among a maximum torque variation rate threshold value and a minimum torque variation rate threshold value.

11. An aircraft including a system (10) comprising an electric assembly including one or more electric loads (5), a turbomachine (1) adapted for setting a shaft of the motor into rotation, an electric source (31) comprising at least one electric machine (3) and adapted for electrically powering the electric assembly, said electric source including a fixed section and a rotating section adapted for interdependently rotating with the shaft, and a protective module (7) against torque peaks, wherein said protective module (7) is a module according to any of claims 7 to 10.
